(19) **Europäisches Patentamt**

**European Patent Office**

**Office européen des brevets**

(11) **EP 1 013 690 A1**

(12) **EUROPÄISCHE PATENTANMELDUNG**

(43) Veröffentlichungstag:
28.06.2000 Patentblatt 2000/26

(51) Int. Cl.[7]: **C08G 18/70**

(21) Anmeldenummer: **98811247.0**

(22) Anmeldetag: **21.12.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Abend, Thomas P.**
**CH-9010 St. Gallen (CH)**

(72) Erfinder: **Abend, Thomas P.**
**CH-9010 St. Gallen (CH)**

(74) Vertreter: **Hepp, Dieter et al**
**Hepp, Wenger & Ryffel AG,**
**Friedtalweg 5**
**9500 Wil (CH)**

(54) **Wässerige lagerstabile Dispersionen oder Lösungen enthaltend isocyanatreaktive Polymere und oberflächendesaktivierte feste Polyisocyanate und Verfahren zum Herstellen derselben sowie zum Herstellen einer Schicht**

(57) Die Erfindung betrifft lagerstabile, einkomponentige wässerige Dispersionen oder Lösungen von funktionellen Polymeren und oberflächendesaktivierten festen Polyisocyanaten, welche bei Normalbedingungen vernetzen.

Die wässerigen Dispersionen enthalten feste, mit Polyaminen oberflächendesaktivierte Polyisocyanate mit mittlerer Teilchengrösse von kleiner oder gleich 10 µm und funktionelle, isocyanatreaktive Polymere.

Kennzeichen der dispergierten oder in Wasser gelösten funktionellen Polymere sind

- minimale Filmbildungstemperatur (MFT) von kleiner oder gleich +5°C,
- Glasübergangstemperatur Tg von kleiner oder gleich -5°C
- Speichermodul G', gemessen bei 10 Hertz und bei 10°C ist kleiner oder gleich $10^7$ Pa

Nach der Applikation und nach dem Verdunsten des Wassers bildet sich ein geschlossener Film, der ein Lösevermögen auf die Oberflächendesaktivierung der festen Isocyanate aufweist: Diese gehen in der Polymerphase in Lösung und reagieren bei Normalbedingungen spontan mit den funktionellen Gruppen, das heisst z.B. mit den Hydroxyl- und Aminogruppen des Polymers. Es resultieren Polymerschichten mit erhöhter Wärme- und Lösungsmittelbeständigkeit, welche als Haftklebstoffe, Montagekleber oder Beschichtungen Verwendung finden.

EP 1 013 690 A1

**Beschreibung**

Die Erfindung betrifft wässerige lagerstabile Dispersionen oder Lösungen, welche isocyanatreaktive Polymere und oberflächendesaktivierte feste Polyisocyanate enthalten, ein Verfahren zum Herstellen der Dispersion und zum Herstellen einer Schicht.

EP 212 511 offenbart wässerige, bei Raumtemperatur lagerstabile Mischungen aus funktionellen Polymeren und dispergierten festen Polyisocyanaten, wobei die festen pulverförmigen Polyisocyanate mit Polyaminen gemäss EP 062 780 oberflächendesaktiviert sind. Diese Mischungen finden in heissvernetzbaren Textildruckpigmentpasten und in Färbeflotten Anwendung. Die Reaktion der Isocyanatgruppen mit den isocyanatreaktiven Gruppen im Polymeren, d.h. der Vernetzung, erfolgt nach dem Druckvorgang im Bereich von Temperaturen über 100°C, wobei während des Vorgangs gleichzeitig das Wasser verdunstet.

JP 09188735 offenbart lagerstabile, reaktive Öl-in-Wasser-Emulsionen bzw. Dispersionen. Flüssige oder feste Polyisocyanate werden in einen festen oder flüssigen hydrophoben Träger, wie Paraffinöl oder Wachs unter Zuhilfenahme eines polymeren Netzmittels emulgiert bzw. dispergiert. In einem zweiten Schritt wird die hydrophobe Dispersion einer wässerigen Dispersion, die isocyanatreaktive Polymere enthält, zugegeben. Die Herstellung der Öl-in-Wasser-Emulsion/Dispersion ist aufwendig und macht den Zusatz unerwünschter Hilfsmittel notwendig.

Aufgabe der vorliegenden Erfindung ist die Herstellung wässeriger Dispersionen oder Lösungen, welche feste, oberflächendesaktivierte Polyisocyanate und isocyanatreaktive Polymere enthalten, welche in dieser Form, d.h. als wässerige Dispersion oder Lösungen lagerstabil sind, jedoch, wenn als Schicht aufgetragen unter Normalbedingungen nach Entfernung des wesentlichen Teils des Wassers vernetzen.

Diese Aufgabe wird durch die Kennzeichen der unabhängigen Ansprüche gelöst.

Insbesondere wird sie gelöst durch wässerige, lagerstabile Dispersion oder Lösung, welche wenigstens ein festes oberflächendesaktiviertes Polyisocyanat und wenigstens ein isocyanatreaktive Gruppen enthaltendes Polymer enthalten, wobei der Speichermodul G' des isocyanatreaktiven Polymeren kleiner oder gleich $10^7$ Pa ist, wenn bei +10°C und 10 Hz gemessen wird. Die minimale Filmbildungstemperatur der Dispersion oder Lösung, die Glasübergangstemperatur Tg des isocyanatreaktiven Polymeren und der Teilchendurchmesser der desaktivierten festen Polyisocyanate müssen dann so eingestellt werden, dass nach Entweichen des überwiegenden Teil Lösungs- oder Dispersionsmittels und Bildung eines geschlossenen Films unter Prozessbedingungen, insbesondere Normalbedingungen, die Reaktion zwischen den Isocyanatgruppen des festen, oberflächendesaktivierten Polyisocyanats und der isocyanatreaktiven Gruppen des Polymeren auslösbar ist.

Diese Eigenschaften der erfindungsgemässen Dispersion wird dann erreicht, wenn das isocyanatreaktive Polymer derart ausgewählt wird, dass bei Prozesstemperatur translatorische Bewegungen der Hauptkettensegmente möglich sind. Dies ist dann gegeben, wenn die Glasübergangstemperatur Tg des isocyanatreaktiven Polymeren mindestens 10°C unter der Prozesstemperatur und der minimalen Filmbildungstemperatur (MFT) der Dispersion oder Lösung liegt. Beständige Filme werden dann erreicht, wenn der mittlere Durchmesser der festen desaktivierten Polyisocyanate so gewählt wird, dass die zugesetzte Menge in der Dispersion und im Film gleichmässig verteilt vorliegt. Gleichmässig verteilt bedeutet, dass die Vernetzung der isocyanatreaktiven Gruppen im Polymeren ohne solche lokale Abweichungen stattfindet, durch welche die Beständigkeit des vernetzten Filmes gefährden wäre.

Eine Ausführungsform der wässerigen, lagerstabilen Dispersion oder Lösung, die wenigstens ein festes oberflächendesaktiviertes Polyisocyanat und wenigstens ein isocyanatreaktives Polymer enthält, ist dann gegeben, wenn die folgenden Bedingungen erfüllt sind:

(a) die minimale Filmbildungstemperatur (MFT) der Dispersion oder Lösung ist kleiner oder gleich + 5°C;

(b) die Glasübergangstemperatur (Tg) des isocyanatreaktiven Polymeren muss kleiner oder gleich -5°C sein;

(c) der Speichermodul G' des isocyanatreaktiven Polymeren muss kleiner oder gleich $10^7$ Pa bei 10°C und 10 Hz sein;

(d) der mittlere Teilchendurchmesser der festen oberflächendesaktivierten Polyisocyanate muss kleiner oder gleich 10 μm (Gewichtsmittel) sein.

Wässerige Dispersionen oder Lösungen, die isocyanatreaktive Polymere und oberflächendesaktivierte feste Polyisocyanate enthalten und den obigen Bedingungen gehorchen, sind lagerstabil.

Lagerstabil in diesem Zusammenhang bedeutet, dass die reaktiven Gruppen beider Komponenten im wesentlichen nicht reagieren und somit unverändert bleiben bzw. ihre Vernetzungfähigkeit beibehalten, solange sie in wässeriger Dispersion oder Lösung vorliegen. Unter dem Begriff "im wesentlichen nicht reagieren" soll im Zusammenhang mit der vorliegenden Erfindung verstanden werden, dass innerhalb von einem Monat Lagerung bei Normalbedingungen nicht mehr als 30 % der isocyanatreaktiven Gruppen des Polymers mit den Isocyanatgruppen des festen, oberflächendesaktivierten Polyisocyanate reagieren bzw. vernetzten.

Die Vernetzung setzt nach einem Verdunsten des überwiegenden Teils des Wassers. Wenn die Dispersion oder Lösung als Schicht appliziert wird, bedeutet dies, dass der überwiegende Teil des Wassers entfernt ist, wenn sich ein geschlossener Film gebildet hat. Unter dem Begriff der Filmbildung wird nach DIN 55945:1996-09 der Übergang eines auf getragenen Beschichtungsstoffes vom flüssigen in den festen Zustand bezeichnet. Die Filmbildung kann durch Trocknung erfolgen. Die Ausbildung eines geschlossenen Films ist Bedingung für die Diffusion, d.h. das Lösen der oberflächendesaktivierten Polyisocyanate in den isocyanatreaktiven Polymeren und der nachfolgenden Vernetzungsreaktion.

Unter Prozessbedingungen soll eine Temperatur grösser oder gleich +5°C und eine relative Luftfeuchtigkeit von kleiner 95% verstanden werden.

Unter Normalbedingungen ist eine Normierung auf 23°C und 65% relative Luftfeuchtigkeit zu verstehen.

Die minimale Filmbildungstemperatur oder auch Mindestfilmbildetemperatur (MFT) gibt die Temperatur an, oberhalb derer eine Dispersion einen geschlossenen Film bildet. Darunter ist die Filmbildung in aller Regel gestört oder unvollständig. Die MFT wird nach DIN 53787:1974-02 bestimmt.

Nach der Entfernung des überwiegenden Teils des Wassers bzw. nach Ausbildung eines geschlossenen Films setzt der Lösevorgang ein und die kompakte Desaktivierungsschicht wird zerstört, womit die Isocyanatgruppen für eine Reaktion mit den reaktiven Gruppen des Polymeren zugänglich werden. Dabei kann es zu unerwünschten Nebenreaktionen der Isocyanatgruppen mit den Resten an Wasser kommen. Da jedoch zu diesem Zeitpunkt die Konzentration an Wasser bereits stark reduziert ist, ist die Nebenreaktion beträchtlich zurückgedrängt und tritt im Vergleich zu den vernetzenden Dispersionen des Standes der Technik kaum in Erscheinung.

Im Zuge der vorliegenden Erfindung soll der Begriff der Dispersion auch Emulsionen und Suspensionen miteinschliessen.

Der pH-Wert der Dispersion oder Lösung liegt im Bereich von 6 bis 9, bevorzugt zwischen 7 und 8. Falls notwendig kann durch Zugabe von anorganischen oder organischen Basen oder Säuren der pH-Wert in den gewünschten Bereich gebracht werden.

Die isocyanatreaktiven Polymere können durch Polymerisation von olefinisch ungesättigten Monomeren in Lösung, Emulsion oder Suspension hergestellt werden. Sie enthalten 0.2 bis 15%, bevorzugt 1 bis 8 % einpolymerisierte Monomere mit isocyanatreaktiven Gruppen, wie Hydroxyl-, Amino-, und Säureamidgruppen.

Einsatz finden darüberhinaus auch wasserlösliche und wasserdispergierbare Polyurethan- oder Polyharnstoffdispersionen, die durch Reaktion von amorphen oder teilkristallinen, reaktiven Polyestern, Sulfopolyestern, Polycaprolactonen, Polycarbonaten und Polyethern, welche Sulfoxyl-, Carboxyl, Hydroxyl- sowie primäre oder sekundäre Aminogruppen tragen, mit aliphatischen oder aromatischen Polxyisocyanaten entstehen.

Die Konzentration der isocyanatreaktiven Polymere in Wasser beträgt ungefähr 30 - 70 Gew.%, bevorzugt 40 - 60 Gew. % und noch bevorzugter 45 bis 55 Gew% des Gesamtgewichtes der Dispersion oder Lösung.

Die Glasübergangstemperatur Tg der isocyanatreaktiven Polymere der Dispersion muss kleiner oder gleich - 5°C sein. Die Glasübergangstemperatur Tg bezeichnet die Temperatur, bei der amorphe oder teilkristalline Polymere vom flüssigen oder gummielastischen Zustand in den hartelastischen oder glasigen Zustand übergehen und umgekehrt. Die viskoelastischen Kenngrössen (Glasübergangstemperatur und Speichermodul) der aus der Dispersion resultierenden Filme werden mit DTMA (dynamisch, thermomechanische Analyse) nach ISO 6721-5 bestimmt. Kalorische Messungen (DSC Differential Scanning Calorimetry) sind ebenfalls anwendbar. Geeignete Verfahren sind in DIN 53765: 1994-03 und ISO 11357-2: 1996 genormt. Eine Beschreibung der dynamischen thermomechanischen Eigenschaften und ihre Bestimmung ist darüberhinaus in der Encyclopedia of Polymer Science and Engineering, Vol 5; H.F. Mark Ed.; New York 1986, p. 299ff., enthalten.

Im Bereich unterhalb der Glasübergangstemperatur ist die Beweglichkeit der Kettensegmente des Polymers so niedrig, dass keine Diffusion der Isocyanate innerhalb nützlicher Frist stattfindet. Einige der geeigneten isocyanatreaktiven Polymere, zum Beispiel ausgewählte Polyurethane oder Polyharnstoffe, können inkompatible Blöcke oder Phasentrennungen und dadurch mehrere Glasübergangstemperaturen aufweisen. Für den hier vorliegenden Fall ist die Tg massgebend, welche den Erweichungstemperaturen der längeren Kettensegmente entspricht, also der Polyether- oder Polyesterketten.

Im Zuge der vorliegenden Erfindung wird die Glasübergangstemperatur des Polymeren in dem Zustand bestimmt, in dem es innerhalb der Dispersion oder Lösung vorliegt. Dies ist von Bedeutung, weil der Dispersion oder Lösung nach Bedarf Weichmacher, Lösungsmittel oder andere Additive zugegeben werden, welche die Glasübergangstemperatur des isocyanatreaktiven Polymeren herabsetzen können. Damit sind erfindungsgemäss auch solche isocyanatreaktiven Polymere geeignet, die zwar Glasübergangstemperaturen von grösser -5°C besitzen, welche jedoch durch entsprechende Additive, insbesondere Weichmacher oder Lösungsmittel eine Glasübergangstemperatur von kleiner oder gleich -5°C erreichen.

Der Speichermodul G', gemessen vor der Vernetzung mit den Polyisocyanaten, muss gleich oder kleiner als

$10^7$ Pa bei +10°C und 10Hz sein. Die Grösse des Speichermoduls G' wird dem DTMA-Diagramm, gemessen bei 10 Hz und einer Temperatur von 10°C, entnommen. Nur wenn der Speichermodul G' kleiner oder gleich $10^7$ Pa ist, ist die Beweglichkeit des Polymers genügend gross, dass Diffusion und Reaktion der Polyisocyanate mit den isocyanatreaktiven Gruppen des Polymers stattfindet. Der Speichermodul G' wird analog der Glasübergangstemperatur in dem Zustand bestimmt, in dem das Polymer in der Dispersion oder Lösung vorliegt.

Als feste oberflächendesaktivierte Polyisocyanate sind alle wasserunlöslichen Di- oder Polyisocyanate oder deren Gemische geeignet, sofern sie einen Schmelzpunkt oberhalb +40°C aufweisen. Es können aliphatische, cycloaliphatische, heterocyclische oder aromatische Polyisocyanate sein. Als Beispiele seien genannt: Diphenylmethan-4,4'-diisocyanat (4,4'-MDI), dimeres 4,4'-MDI, Naphthalin-1,5-diisocyanat (NDI), 3,3'-Dimethyl-biphenyl-4,4'-diisocyanat (TODI), dimeres 1-Methyl-2,4-phenylen-diisocyanat (TDI-U), 3,3'-Diisocyanato-4,4'-dimethyl-N,N'-diphenylharnstoff (TDIH), Additionsprodukt von 2 Mol 4,4'-MDI mit 1 Mol Diethylenglykol, Additionsprodukte von 2 Mol 1-Methyl-2,4-phenylen-diisocyanat mit 1 Mol 1,2-Ethandiol oder 1,4-Butandiol, das Isocyanurat des IPDI (IPDI-T).

Die festen Polyisocyanate sollten bevorzugt pulverförmig mit einem mittleren Teilchengrössendurchmesser von kleiner oder gleich 10 µm vorliegen (Gewichtsmittel). Sie fallen im Regelfall bei der Synthese als Pulver mit der geforderten Teilchengrössen von 10 µm oder weniger an, andernfalls müssen die festen Polyisocyanate (vor der Desaktivierungsreaktion) durch Mahlprozesse und/oder Siebprozesse in den erfindungsgemässen Teilchenbereich gebracht werden. Die Verfahren sind Stand der Technik.

Alternativ können die pulverförmigen Polyisocyanate durch eine der Oberflächendesaktivierung nachgeschaltete Nassmahlung und Feindispergierung auf eine mittlere Teilchengrösse von gleich oder weniger als 10 µm gebracht werden. Hierfür eignen sich Dispergiergeräte von Rotor-Stator Typ, Rührwerkskugelmühlen, Perl- und Sandmühlen, Kugelmühlen und Reibspaltmühlen. Je nach Polyisocyanat und Verwendung erfolgt die Vermahlung am desaktivierten Polyisocyanat, in Gegenwart des Desaktivierungsmittels, im nichtreaktiven Dispergiermittel oder Wasser mit nachfolgender Desaktivierung. Das gemahlene und oberflächenstabilisierte Polyisocyanat lässt sich auch aus den Mahl-Dispersionen abtrennen und trocknen. Das Verfahren ist in EP 204 970 beschrieben.

Die Oberflächenstabilisierungsreaktion kann auf verschiedenen Wegen durchgeführt werden:

- Durch Dispersion des pulverförmigen Isocyanats in einer Lösung des Desaktivierungsmittels.
- Durch Eintragen einer Schmelze eines niederschmelzenden Polyisocyanats in eine Lösung des Desaktivierungsmittels in einem nichtlösenden flüssigen Dispersionsmittel.
- Durch Zugabe des Desaktivierungsmittels oder einer Lösung desselben, zur Dispersion der festen feinteiligen Isocyanate.

Die festen Polyisocyanate werden vorzugsweise durch Einwirkung von primären und sekundären aliphatischen Aminen, Di- oder Polyaminen, Hydrazinderivaten, Amidinen, Guanidinen, desaktiviert. Bewährt haben sich Ethylendiamin, 1,3-Propylendiamin, Diethylentriamin, Triethylen-tetramin, 2,5-Dimethylpiperazin, 3,3'-Dimethyl-4,4'-diamino-dicyclohexylmethan, Methylnonan-diamin, Isophorondiamin, 4,4'-Diaminodicyclohexylmethan, Diamino- und Triamino-polypropylenether, Polyamidoamine, und Gemische von Mono-, Di- und Polyaminen.

Die Konzentration des Desaktivierungsmittels soll 0.1 bis 20, bevorzugt 0.5 bis 8 Equivalentprozent betragen, bezogen auf die total vorhandenen Isocyanatgruppen.

Das Verhältnis der Isocyanatgruppen der oberflächendesaktivierten Polyisocyanate und der isocyanatreaktiven Gruppen der Polymere soll im Bereich 0.1 bis 1.5 liegen. Dies entspricht im allgemeinen einer Konzentration des oberflächendesaktivierten festen Isocyanats von 0.1 bis 15 Gewichtsteilen, bevorzugt 1 - 10 Teilen, ganz besonders bevorzugt 2 - 8 Teilen pro 100 Teile isocyanatreaktives Polymer.

Die Vernetzung im geschlossenen Film kann abhängig von der Art des festen oberflächendesaktivierten Polyisocyanates, den funktionellen Gruppen des Polymeren, des Löslichkeitsparameters des Polymers, der reaktiven oder nichtreaktiven Zuschlagstoffe innerhalb von 1 bis 10 Tagen bei Raumtemperatur erfolgen. Die Vernetzungsreaktion kann durch Katalysatoren und gegebenenfalls durch Temperaturen über der Normaltemperatur beschleunigt werden.

Die wässerige Dispersion oder Lösung enthält gegebenenfalls zusätzliche Katalysatoren für die Reaktion der Isocyanatgruppen mit den funktionellen Gruppen des Polymeren. Weiterhin gegebenenfalls Lösungsmittel, Weichmacher, klebrigmachende Harze oder niedrigmolekulare, isocyanatreaktive Verbindungen, welche als zusätzlichen Effekt einen Einfluss auf die Glasübergangstemperatur, die minimale Filmbildungstemperatur und auf den Löslichkeitsparameter des Polymers ausüben können. Zusätzlich können der wässerigen Dispersion oder Lösung Zuschlagstoffe zugegeben werden.

Als niedrigmolekulare Polymere oder Harze werden diejenigen Polymere oder Harze verstanden, die ein Molekulargewicht gleich oder kleiner 5000 Da aufweisen. Als hochmolekulare Polymere oder Harze gelten alle mit Molekulargewichten über 5000 Da (Gewichtsmittel).

Die Katalysatoren für die Reaktion der Isocyanatgruppen mit den funktionellen Gruppen des Polymers sind vom System oberflächendesaktiviertes Isocyanat/isocyanatreaktives Polymer abhängig; dies sind für Urethankatalysatoren organische Zinn-, Eisen-, Blei-, Kobalt-, Wismuth-, Antimon-, Zink-Verbindungen oder ihre Mischungen. Bevorzugt sind solche Katalysatoren, welche in wässeriger Lösung oder Dispersion hydrolysestabil sind. Alkylmercaptidverbindungen des Dibutylzinns sind aufgrund der höheren Hydrolysenstabilität besonders geeignet.

Tertiäre Amine wie Dimethylbenzylamin, Diazabicyclo-undecen, sowie nichtflüchtige Polyurethanschaumkatalysatoren auf tertiärer Aminbasis, wie etwa Methyldiethanolamin, können für spezielle Zwecke oder in Kombination mit Metallkatalysatoren verwendet werden.

Die Konzentration der Katalysatoren liegt im Bereich von 0.001 bis 3 %, bevorzugt 0.01% bis 1% bezogen auf das reaktive System.

Unter dem Begriff Zuschlagstoffe sollen alle Zusätze bzw. Stoffe verstanden werden, die weder auf die Lagerstabilität noch auf die spontane Vernetzung (d.h. auf eine der Bedingungen a bis d) einen Einfluss ausüben. Zu dieser Gruppe gehören z.B. Netzmittel, grenzflächenaktive Stoffe, haftvermittelnde Stoffe, organofunktionelle Silane, Schutzkolloide, organische oder anorganische Verdickungsmittel, Füllstoffe, Pigmente, Farbstoffe, Entschäumer, Biozide, Lichtstabilisatoren, Alterungsstabilisatoren, Korrosionsschutzmittel.

Die Gruppe der nach obiger Definition nicht-inerten Zusatzstoffe umfasst Lösungsmittel, feste und flüssige Weichmacher, niedrigmolekulare, flüssige oder feste Harze zur Erhöhung der Klebrigkeit, niedrigmolekulare isocyanatreaktive Verbindungen. Im Gegensatz zu den inerten Zuschlagstoffen können Tg, MFT und der Löslichkeitsparameter des isocyanatreaktiven Polymeren beeinflusst werden. Zum Beispiel wird bei Mitverwendung von polaren Lösungsmitteln, wie N-Methylpyrrolidon, N-Methylacetamid, Dimethylformamid, Propylencarbonat, Dioxan, Glykolmonomethlyetheracetat, Tg und MFT gesenkt. Erfindungsgemäss einsetzbar sind diese polaren Lösungsmittel jedoch nur dann, wenn kein Zerstören der Desaktivierungsschicht, der Polyharnstoffschicht, erfolgt.

Als niedrigmolekulare isocyanatreaktive Verbindungen können wasserlösliche oder emulgierbare niedrigmolekulare flüssige Polyole oder/und Polyamine eingesetzt werden. Beispiele sind Butandiol, Trimethylolpropan, ethoxyliertes Bisphenol A, Methyldiethanolamin, Triethanolamin, aminoterminierte Polypropylenether, Polyamidoamine, 3,5-Diethyl-toluylen-2,4- und 2-6-diamin.

Unter dem Begriff Weichmacher werden flüssige oder feste, organische Substanzen mit geringem Dampfdruck verstanden. Sie können ohne chemische Reaktion, vorzugsweise durch ihr Löse- bzw. Quellvermögen, u.U. aber auch ohne ein solches, mit hochpolymeren Stoffen unter Bildung eines homogenen Systems in physikalische Wechselwirkung treten.

Obwohl der Übergang zwischen Weichmacher und Lösemittel fliessend sein kann, sollen unter dem Begriff Lösemittel nur solche Substanzen verstanden werden, die nach Aushärtung des Films möglichst vollständig verschwunden sein sollen. Weichmacher sollen im Gegensatz dazu möglichst vollständig im Film verbleiben, um ihm, bzw. seinen Komponenten, die angestrebten Endeigenschaften zu verleihen.

Der Löslichkeitsparameter $\delta$ des funktionellen Polymers sollte im Bereich von 8.5 bis 13.5 $(cal/cm^3)^{1/2}$ liegen. Für die Definition des Löslichkeitsparameters siehe Römpp Lexikon, Lacke und Druckfarben, Hrsg. U. Zorll, Stuttgart 1998, S. 361 ff.

Die Herstellung der Dispersionen geschieht in den bekannten Dispergiergeräten, wie Dissolvern, Rührwerksmühlen, Perlmühlen, Rotor-Stator-Mühlen, Planetenmischgeräten. Dabei ist darauf zu achten, dass die oberflächenstabilisierten feinteiligen Polyisocyanate nicht hohen Scherkräften ausgesetzt werden, damit die Harnstoffschicht auf der Oberfläche nicht zerstört wird. Daraus könnten reaktive Dispersionen mit beschränkter Lagerzeit oder spontaner Gelbildung resultieren. Die Mischtemperatur der reaktiven Dispersionen ist je nach der Art der verwendeten festen Polyisocyanate im Bereich von +15 bis +50°C.

Es hat sich bewährt, wenn konzentrierte flüssige Stammischungen mit den festen oberflächenstabilisierten Polyisocyanaten hergestellt werden, welche der wässerigen Polymerdispersion oder -lösung erst nach Einarbeitung der Komponenten zugesetzt werden. Die Herstellung der Stammischungen geschieht bei Temperaturen von +5°C bis +30°C.

Das Verdunsten des Wassers und damit die Ausbildung des geschlossenen Films kann durch Kalt- oder Warmluftströme, durch niedere Luftfeuchtigkeit, oder durch erhöhte Temperatur der Substrate beschleunigt werden. Die Löslichkeit und Diffusion der Polyisocyanate im Polymerfilm sowie die Reaktion derselben mit den isocyanatreaktiven Gruppen des Polymers wird durch erhöhte Temperaturen des Films oder des Substrats begünstigt.

Die erfolgte Vernetzung kann makroskopisch mit der Erhöhung der Temperaturbeständigkeit in der Wärme, mit fehlender Thermoplastizität bei erhöhten Temperaturen, sowie mit höherer Wasserbeständigkeit (im Vergleich zum unvernetzten Polymer) nachgewiesen werden. Auch mit Analysenmethoden wie Erweichungspunktbestimmung, dynamische thermomechanische Analyse (DTMA) oder Löslichkeitbestimmung kann der Nachweis der Vernetzung geführt werden.

Die erfindungsgemässen reaktiven Polymerdispersionen werden vorteilhaft für folgende Anwendungen verwendet:

A. Vernetzte Haftklebstoffe oder Montagekleber mit erhöhter Temperaturbeständigkeit und kohäsiver Festigkeit.

Unter Haftklebstoffen werden viskoelastische Klebstoffe, die in lösungsmittelfreier Form bei Raumtemperatur permanent klebrig und klebfähig bleiben und bei geringer Substratspezifität bei leichtem Anpressdruck sofort auf fast allen Substraten haften. Die Vernetzungsdichte (Anzahl isocyanatreaktive Gruppen pro Moleküleinheit) bestimmt den Grad an Haftklebrigkeit nach vollständiger Vernetzungsreaktion.
Die Vernetzungsdichte (Anzahl isocyanatreaktive Gruppen pro Moleküleinheit) ist bestimmt durch

i) die Zahl der funktionellen vernetzungsfähigen Gruppen pro Molekül

ii) Anzahl Equivalente Isocyanatgruppen pro Equivalent isocyanatreaktive Gruppen. Durch eine mögliche Untervernetzung kann die verbleibende Haftklebrigkeit und der Anstieg der Temperaturbeständigkeit in der Wärme gezielt gesteuert werden.

B. Im unvernetzten Zustand haftklebende Montagekleber, die klebfrei vernetzen

Vernetztungsfähige Haftkleber, die zu nichtklebrigen Klebstoffschichten vernetzen. Anwendungen sind beispielsweise Klebstoffe für flexible oder starre Kunststoffschäume.

C. Trockene im unvernetzten Zustand klebfreie Montage- oder Kaschierkleber, im thermoplastischen Zustand kontaktklebrig

Im unvernetzten Zustand bilden diese reaktiven Dispersionen klebfreie trockene Filme, die aber vor der endgültigen Vernetzung bei Raumtemperatur oder leicht erhöhter Temperatur thermoplastisch und mit sich selbst kontaktklebrig sind. Durch Anwendung von Druck und/oder höherer Temperatur erfolgt die Bildung der Klebestelle, die anschliessend vernetzt.

D. Spontan vernetzende Laminierkleber

Für Kunststofffolien, Metallfolien, Textilien, etc., mit oder ohne anfängliche resp. bleibende Haftklebrigkeit. Basis sind Acryl- oder Methacrylester-copolymere oder Polyurethandispersionen auf Polyether- oder Polyesterbasis.

E. Vernetzende Textilbeschichtungen und vernetzende Textilkleber

Dispersionen auf Polyurethan- oder Polyurethan-/Acrylbasis; einkomponentig, aber mit unbeschränkter Lager- und Verarbeitungszeit. Auch wärmeaktivierbar.

F. Reaktive einkomponentig lagerfähige, vernetzende Lacke und Beschichtungen

Vor allen auf Polyurethandispersionsbasis. "Softfeel"-Effektlacke.
Die erfindungagemässen Dispersionen sind für eine Vielzahl weiterer Anwendunsgebiete einsetzbar und nicht auf die obigen beschränkt.
Die vorliegende Erfindung wird durch nachfolgende Beispiele weiterhin erläutert .

**Beispiele**

Tabelle 1

| Applikations- und Prüfverfahren, Lagerungen | |
|---|---|
| Lagerung 1 | Dispersion bei Raumtemperatur applizieren, nach max. 10 Minuten Klebeflächen fügen. Verbund 10 Tage bei Normalbedingungen lagern. |
| | Wärmestandfestigkeit bei 140°C über 30 Minuten prüfen. Registrieren: Minuten bis zum Haftverlust. |

Tabelle 1 (fortgesetzt)

| Applikations- und Prüfverfahren, Lagerungen | | |
|---|---|---|
| Lagerung 2 | Dispersion bei Raumtemperatur applizieren, nach max. 10 Minuten Klebeflächen fügen, 3 Tage bei Normalbedingungen lagern. | |
| | Dann unter Klammerdruck 0.5 Std. auf 120°C erhitzen (Objekttemperatur). Abkühlen und 24 Std. bei Normalbedingungen lagern. Aufsteigende Wärmestandfestigkeit von 40°C bis 150°C prüfen. Registrieren: Maximale Wärmestandfestigkeit in °C. | |
| Lagerung 3 | Auf Klebeflächen auftragen, Verdunsten des Wassers bei Raumtemperatur. Die mit Klebstoffschicht versehene Fläche offen an der Luft für 30 Tage liegen lassen. | |
| | Klebeflächen fügen und unter Klammerdruck während 0.5 Std. auf 120°C erhitzen, Abkühlen und 24 Std. bei Normalbedingungen lagern. Registrieren: Haftung der Klebeflächen; aufsteigende Wärmestandfestigkeit prüfen. | |
| Lagerung 4 | Flüssige Dispersion während 20 Tagen bei Raumtemperatur und 10 Tage bei 35°C lagern, dann auf Klebefläche applizieren. Weiter wie bei Lagerung 1 und 2 | |

Prüfung der Wärmestandfestigkeit der Verklebungen: (Ähnlich der Methode ASTM D 4498-85/1989)

Prüflinge mit 100x20x5 mm$^3$ aus Buchenholz wurden einfach überlappend pressverklebt, Ueberlappung 10 mm, Klebefläche 20x10 mm$^2$. Für die Bestimmung der Wärmefestigkeit nach Lagerungen 1 bis 3 wurden die Prüflinge senkrecht in den Umluftofen gehängt und einseitig mit 300 g belastet. Festigkeitsverlust der Verklebungen führte zum Fallen der Gewichte.

Um bei der Heissverklebung nach Lagerung 2 und 3 die Nebenreaktionen von Wasser mit Isocyanaten möglichst auszuschalten, wurden die Holzprüflinge im Umluftofen unter Vakuum (Restdruck 0.1 bar) während 0.5 Stunden auf 120°C erhitzt.

Bei der Bestimmung der aufsteigenden Wärmestandfestigkeit nach Lagerung 2 und 3 wurde die Temperatur jeweils alle 15 Minuten um 10°C erhöht: Anfangstemperatur 40°C, Endtemperatur 150°C.

Herstellung der wässerigen Suspension von festem oberflächendesaktivertem Polvisocyanat; allgemeine Vorschrift (Stammlösung):

Unter dem Dissolver bei 750 UPM wurden bei 15 bis 20°C die folgende wässerigen Suspensionen von oberflächendesaktivierten Polyisocyanaten hergestellt:

| | | | Gewichtsteile |
|---|---|---|---|
| (1) | Wasser | | 106 |
| (2) | Kelzan S (Monsanto), 3 %ige Lösung in Wasser | | 33 |
| (3) | Polyoxyethylensorbitantrioleat | | 1 |
| (4) | Polyamin | | 2 - 6 |
| (5) | Polyisocyanat-Pulver (Mittl. Teilchengrösse (Gewichtsmittel) < 10 μm vor oder nach Nassmahlung) | | 80 |
| | | | 222 - 226 |

Mischungsbestandteile; Erläuterungen

(2) Kelzan S: Hydrokolloid, Viskositätsstabilisator

(3) Polyoxyethylensorbitan-trioleat Tween 85 (Fluka): Netz- und Dispersionsmittel

(4) Polyamin: Mischung aus Euretek 505 (Witco) Polyamidoamin und Laromin C 260 (BASF), 50:50 Gewichtsteile, Equivalent 131 g/eq. Die Menge Polyamin entsprach jeweils 5 Equivalentprozent der im festen Polyisocyanat vorhandenen Isocyanatgruppen:

| (5) Feste Polyisocyanate | | Equivalent theor. |
|---|---|---|
| TDI-U | 2,4-Toluylendiisocyanat-uretdion, TDI-dimer, | 174 |
| TDI-H | 2,4-Toluylendiisocyanat-harnstoff | 161 |
| IPDI-T | Isocyanurat des IPDI | 222 |

Tabelle 2

| | Verwendete Klebstoffdispersionen: | |
|---|---|---|
| A) | Alberdingk AC-7505 Alberdingk + Boley GmbH, D-Krefeld (PSA) | Copolymer von Acrylsäureestern, 65 % Feststoff, haftklebrig; mit isocyanatreaaktiven Gruppen im Polymer |
| B) | Alberdingk U-410 Alberdingk + Boley GmbH, D-Krefeld (PUR) | Polyether-Polyurethandispersion, 40 % Feststoff, mit isocyanatreaktiven Gruppen im Polymer |
| C) | Quilastic DEP-170 Merquinsa SA E-Barcelona (PUR) | Polycaprolacton-PUR-Dispersion, aliphatisches Polyisocyanat, 50 % Feststoff, mit isocyanatreaktiven Gruppen im Polymer. |
| D) | Jagotex KEM2110(PVOC) Ernst Jäger GmbH D-Düsseldorf | Polyvinylacetat-Acrylatdispersio-55% Feststoff mit isocyanatreaktiven Gruppen im Polymer.Kontakt kleber mit Aktivierungstempera tur 60-80°C |

Herstellung der reaktiven Klebstoffdispersionen; allgemeine Vorschrift:

Falls die Dispersionen in der Lieferform einen pH von weniger als 7 aufwiesen, wurde durch Zugabe von wässerigem Ammoniak ein pH von 7 - 8 eingestellt. Es wurde mit dem Dissolver ein reaktiver Dispersionsklebstoff mit den angegebenen Polyisocyanaten wie folgt hergestellt:

| | | Gewichtsteile in Dispersion | Gewichtsteile pro 100 Polymer |
|---|---|---|---|
| (1) | Klebstoffdispersion, ca. 40 - 65 % Feststoff | 100 | |
| (2) | Dispersion von desaktiviertem Polyisocyanat ca. 35 %-ig | 16 | ca. 11.2 |
| (3) | Metatin Katalysator 715; Basis Dibutylzinnalkylmercaptid (Acima AG, CH-Buchs) 10 %-ig in Ethylenglykoldimethylether | 1 | ca. 0.2 |
| | | $\overline{117}$ | |

Die Klebstoffmischungen wurden mit einer Spiralrakel auf die Klebeflächen von Buchenholzprüflingen aufgebracht, dann gemäss den Lagerungen 1-3 behandelt. Das Auftragsgewicht betrug nach der Trocknung etwa 100 g/m$^2$. Geprüft wie angegeben.

Tabelle 3

| Erfindungsrelevante Eigenschaften der Dis persionen in der Lieferform, resp. als wasserfreier Film: | | | | |
|---|---|---|---|---|
| | Dispersionen A) und B) erfindungsgemäss | | Dispersionen C) und D) nicht erfindungsgemäss | |
| Dispersion | A) PSA AC-7505 | B) PUR U-410 | C) PUR DEP-170 | D) PVOAc KEM 2010 |
| MFT minimale Filmformungstemperatur [°C] (< + 5°C) | 0 | 0 | +5 | 0 - (+5) |
| Glasübergangstemperatur [°C] (< - 5°C) | - 34 | - 30 | + 52 | - 3 |
| Speichermodul bei 10°C und 10 Hz, [Pa] (< $10^7$ Pa) | $4x10^5$ | $3x10^6$ | $7x10^8$ | $2x10^7$ |

Tabelle 4.1

| Wärmestandfestigkeit in °C der Verklebungen gemessen nach Lagerung 1 bis 4 | | | | |
|---|---|---|---|---|
| Dispersion | A) PSA AC-7505 | B) PUR U-410 | C) PUR DEP-170 | D) PVOAc KEM 2010 |
| Dispersion ohne festes Isocyanat, Lagerung 2, aufsteigende Wärmestandfestigkeit, °C | 73 | 58 | 60 | 55 |
| Festes Polyisocyanat in der Dispersion, mitt-lere Teilchengrösse < 10 μm | TDI-U | TDI-U | TDI-H | TDI-U |
| Lagerung 1 10 Tage Vernetzung bei Nor-malbedingungen, Prü-fung bei 140°C während max. 30 Min. | > 30 Min. | > 30 Min. | < 2 Min. | < 2 Min. |
| Lagerung 2 Vernetzung bei 120°C nach 3 Tagen bei Normalbe-dingungen. Aufstei-gende Wärmestandfestigkeit, [°C] | > 150 | > 150 | > 150 | > |
| Lagerung 3 Während 30 Tagen offen gelagerte Schichten, dann Pressverklebung bei 120°C. Aufsteigende Wärmestandfestigkeit, °C | keine Kontaktverklebung, keine Haftung | > 150 | > 150 | > 150 |
| Lagerung 2 Aber mit Dispersion, gealtert nach Lagerung 4 | > 150 | > 150 | > 150 | > 150 |

Tabelle 4.1 (fortgesetzt)

| Wärmestandfestigkeit in °C der Verklebungen gemessen nach Lagerung 1 bis 4 | | | | |
|---|---|---|---|---|
| Dispersion | A) PSA AC-7505 | B) PUR U-410 | C) PUR DEP-170 | D) PVOAc KEM 2010 |
| | Erfindungsgemäss | Erfindungsge- mäss | Vergleichsversuch, nicht erfindungsge- mäss | Vergleichsversuch, nicht erfindungsge- mäss |

Tabelle 4.2

| Wärmestandfestigkeit in °C der Verklebungen gemessen im Bereich 40 - 150°C nach Lagerung 1 bis 4 | | | | |
|---|---|---|---|---|
| Dispersion | A) PSA AC 7505 | B) PUR U-410 | C) PUR DEP 170 | D) PVOAc KEM 2010 |
| Dispersion ohne festes Isocyanat, Lagerung 2, aufstei- gende Wärmestand- festigkeit, [°C] | 73 | 58 | 60 | 55 |
| Festes Polyisocyanat in der Dispersion, mittlere Teilchengrösse < 10 µm | TDI-H | TDI-H | IPDI-T | TDI-H |
| Lagerung 1 10 Tage Vernetzung bei Normalbedingungen, Prüfung bei 140°C während max. 30 Min. | > 30 Min. | > 30 Min. | < 2 Min. | < 2 Min. |
| Lagerung 2 Vernetzung bei 120°C nach 3 Tagen bei Normal- bedingungen. Auf- steigende Wärmestandfestig- keit, [°C] | > 150 | > 150 | > 150 | > 150 |
| Lagerung 3 Während 30 Tagen offen gela- gerte Schichten, dann Pressverkle- bung bei 120°C. Auf- steigende Wärmestandfestig- keit, °C | keine Kontaktverkle- bung, keine Haftung | > 150 | > 150 | > 150 |
| Lagerung 2 Aber mit Dispersion, gealtert nach Lagerung 4 | > 150 | > 150 | > 150 | > 150 |
| | Erfindungsgemäss | Erfindungsge- mäss | Vergleichsversuch nicht erfindungsge- mäss | Vergleichsversuch nicht erfindungsge- mäss |

**Patentansprüche**

1. Wässerige, lagerstabile Dispersion oder Lösung enthaltend wenigstens ein festes oberflächendesaktiviertes Polyisocyanat und wenigstens ein isocyanatreaktive Gruppen enthaltendes Polymer dadurch gekennzeichnet, dass der Speichermodul G' des isocyanatreaktiven Polymeren kleiner oder gleich $10^7$ Pa bei +10°C und 10 Hz ist und die minimale Filmbildungstemperatur der Dispersion, die Glasübergangstemperatur Tg des isocyanatreaktiven Polymeren und der Teilchendurchmesser der desaktivierten festen Polyisocyanate so eingestellt werden, dass nach Entweichen vom überwiegenden Teil Dispersions- oder Lösungsmittels und Bildung eines geschlossenen Films unter Prozessbedingungen, insbesondere Normalbedingungen, die Reaktion zwischen den Isocyanatgruppen des festen, oberflächendesaktivierten Polyisocyanats und der isocyanatreaktiven Gruppen des Polymeren auslösbar ist.

2. Wässerige, lagerstabile Dispersion oder Lösung enthaltend wenigstens ein festes oberflächenmodifiziertes Polyisocyanat und wenigstens ein isocyanatreaktives Polymer dadurch gekennzeichnet, dass

   - die minimale Filmbildungstemperatur (MFT) der Dispersion oder Lösung kleiner oder gleich +5°C ist;
   - die Glasübergangstemperatur Tg des isocyanatreaktiven Polymeren kleiner oder gleich -5°C ist;
   - der Speichermodul G' des isocyanatreaktiven Polymeren kleiner oder gleich $10^7$ Pa ist, gemessen bei 10 Hz und +10°C;
   - der mittlere Teilchendurchmesser der festen Polyisocyanate kleiner oder gleich 10 μm ist.

3. Wässerige Dispersion oder Lösung gemäss Anspruch 1 bis 2 dadurch gekennzeichnet, dass der pH-Wert der Dispersion oder Lösung zwischen 6 und 9, bevorzugt zwischen 7 und 8 liegt.

4. Schicht herstellbar aus einer wässerigen Dispersion oder Lösung gemäss Anspruch 1 bis 3 dadurch gekennzeichnet, dass die Schicht nach Erreichen eines geschlossenen Films vernetzt.

5. Verfahren zur Herstellung von bei Prozessbedingungen, insbesondere Normalbedingungen vernetzender Schichten aus lagerstabilen, wässerigen Dispersionen oder Lösungen, dadurch gekennzeichnet dass,

   (a) eine wässerige, lagerstabile Dispersion oder Lösung enthaltend wenigstens ein festes, oberflächendesaktiviertes Polyisocyanat und wenigstens ein isocyanatreaktive Gruppen enthaltendes Polymer, bereitgestellt wird, wobei

   - die minimale Filmbildungstemperatur (MFT) der reaktiven Dispersion kleiner oder gleich +5°C ist;
   - die Glasübergangstemperatur Tg des isocyanatreaktiven Polymeren kleiner oder gleich -5°C ist;
   - der Speichermodul G' des isocyanatreaktiven Polymeren kleiner oder gleich $10^7$ Pa gemessen bei 10 Hz und +10°C ist;
   - der mittlere Teilchendurchmesser der festen Polyisocyanate kleiner oder gleich 10 μm ist;

   (b) die wässerige Dispersion oder Lösung auf mindestens ein Substrat als Schicht aufgetragen wird.
   (c) das Wasser bis zum Erreichen eines geschlossenen Films gegebenenfalls durch Einwirkung von Wärme, Kalt- oder Warmluftströme, niedrige Luftfeuchtigkeiten und/oder Diffusion in das darunterliegende Substrat entfernt wird;
   (d) die Reaktion zwischen den isocyanatreaktiven Gruppen des Polymeren mit den Isocyanatgruppen des Polyisocyanates bei Normalbedingungen nach Erreichen des geschlossenen Films ausgelöst wird.

6. Verfahren zum Herstellen einer wässerigen Dispersion oder Lösung gemäss Anspruch 1 - 3 enthaltend mindestens ein oberflächendesaktiviertes Polyisocyanat und mindestens ein isocyanatreaktive Gruppen enthaltendes Polymer, dadurch gekennzeichnet, dass

   (a) mindestens ein isocyanatreaktive Gruppen enthaltendes Polymer in Wasser gelöst oder dispergiert wird;
   (b) gegebenenfalls inerte Zuschlagsstoffe zugegeben werden;
   (c) gegebenenfalls nicht inerte Zuschlagsstoffe zugegeben werden;
   (d) eine flüssige Stammlösung oder Dispersion mindestens eines festen, oberflächenmodifizierten Polyisocyanates bei Temperaturen in einem Bereich von +5°C bis +30°C hergestellt wird;
   (e) die unter (d) erhaltene Stammlösung mit der unter (a) bis (c) erhaltenen Dispersion vermischt wird.

7. Verwendung einer wässerigen Dispersion oder Lösung gemäss einem der Ansprüche 1 oder 2 als Klebstoff.

8. Wässerige, lagerstabile Dispersion oder Lösung bzw. die mit dieser Dispersion hergestellte Schicht gemäss einem der Ansprüche 1 bis 4 dadurch gekennzeichnet, dass das isocyanatreaktive Gruppen enthaltende Polymer ausgewählt ist aus der Gruppe der Acryl- oder Methacrylester-copolymere.

9. Wässerige, lagerstabile Dispersion oder Lösung bzw. die mit dieser Dispersion hergestellte Schicht gemäss einem der Ansprüche 1 bis 4 dadurch gekennzeichnet, dass das isocyanatreaktive Gruppe enthaltende Polymer, ausgewählt ist aus der Gruppe der Polyurethan- oder Polyharnstoffe auf Polyester- oder Polyetherbasis.

10. Wässerige, lagerstabile Dispersion oder Lösung bzw. die mit dieser Dispersion hergestellte Schicht gemäss einem der Ansprüche 1 bis 4 dadurch gekennzeichnet, dass das Verhältnis der Isocyanatgruppen des Polyisocyanats und der isocyanatreaktiven Gruppen der Polymere im Bereich von 0.1 bis 1.5 liegt.

Europäisches
Patentamt

## EUROPÄISCHER RECHERCHENBERICHT

Nummer der Anmeldung

EP 98 81 1247

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US 4 716 182 A (HESS HEINRICH ET AL) 29. Dezember 1987 * Spalte 2, Zeile 16 - Spalte 6, Zeile 25 * * Beispiel 1 * | 1,2,4,5, 10 | C08G18/70 |
| A | US 5 159 011 A (BLUM RAINER ET AL) 27. Oktober 1992 * Spalte 2, Zeile 28 - Spalte 7, Zeile 42 * * Beispiele 1,2 * | 1,2,5,6, 8,10 | |
| D,A | US 4 849 262 A (UHL GUENTER ET AL) 18. Juli 1989 * Spalte 1, Zeile 43 - Spalte 7, Zeile 22 * * Beispiele 3,4,13 * | 1,2,5,6, 8,10 | |
| A | US 5 739 206 A (GUERIN GILLES ET AL) 14. April 1998 * Spalte 1, Zeile 21 - Spalte 4, Zeile 22 * * Beispiel 1 * | 1,8,10 | RECHERCHIERTE SACHGEBIETE (Int.Cl.6) C08G |

Der vorliegende Recherchenbericht wurde für alle Patentansprüche erstellt

| Recherchenort | Abschlußdatum der Recherche | Prüfer |
|---|---|---|
| DEN HAAG | 21. April 1999 | Neugebauer, U |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 98 81 1247

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-04-1999

| Im Recherchenbericht angeführtes Patentdokument | Datum der Veröffentlichung | Mitglied(er) der Patentfamilie | Datum der Veröffentlichung |
|---|---|---|---|
| US 4716182 A | 29-12-1987 | DE 3529251 A<br>CA 1257445 A<br>EP 0212413 A<br>JP 62041214 A | 26-02-1987<br>11-07-1989<br>04-03-1987<br>23-02-1987 |
| US 5159011 A | 27-10-1992 | DE 4022602 A<br>EP 0467168 A | 23-01-1992<br>22-01-1992 |
| US 4849262 A | 18-07-1989 | DE 3529530 A<br>AT 40840 T<br>EP 0212511 A<br>JP 62041384 A | 26-02-1987<br>15-03-1989<br>04-03-1987<br>23-02-1987 |
| US 5739206 A | 14-04-1998 | FR 2730737 A<br>AU 4441296 A<br>BR 9600769 A<br>CA 2169896 A<br>CN 1134439 A<br>EP 0728787 A<br>HU 9600387 A<br>JP 8253730 A<br>JP 10310623 A<br>US 5853807 A<br>ZA 9601201 A | 23-08-1996<br>29-08-1996<br>23-12-1997<br>22-08-1996<br>30-10-1996<br>28-08-1996<br>28-04-1997<br>01-10-1996<br>24-11-1998<br>29-12-1998<br>23-08-1996 |

EPO FORM P0461

Für nähere Einzelheiten zu diesem Anhang : siehe Amtsblatt des Europäischen Patentamts, Nr. 12/82